# EUROPEAN PATENT APPLICATION

(11) **EP 4 527 205 A1**
(43) Date of publication of application: **26.03.2025**
(21) Application number: 24201379.5
(22) Date of filing: 19.09.2024
(51) Int. Cl.: A21D 2/38, A21D 13/02, A21D 13/047, A21D 13/062, A21D 13/064, A23L 7/10, C12C 1/16

(54) **METHOD OF SEPARATION OF ENDOSPERM AND EXOSPERM FRACTIONS FROM BREWER'S MASH**

(30) Priority: 21.09.2023 CZ 20230368
(71) Applicant: CaliBread Consulting s.r.o., 25301 Chyne (CZ)
(72) Inventor: Novak, Petr, 15300 Praha 5 (CZ)
(74) Representative: Sedlák, Jirí

(57) **Abstract**

The method of separating the endosperm and exosperm fractions from the brewer's spent grains involves conveying the brewer's spent with a sanitized screw extractor or by hand into a double-screw spiral press with round edges and 0.5 to 1.0 mm diameter screen openings operating at 70 to 100 rpm. The endosperm fraction is forced through a sieve on the perimeter of the press, the exosperm fraction leaves through an opening in the front part of the press. The separated endosperm and exosperm fractions are filled into transport vacuum-sealable containers and cooled to 4°C. The thus prepared endosperm and/or exosperm fraction is used in the food industry to calibrate added insoluble and/or soluble fiber, protein and/or as a flour substitute to reduce the carbohydrate content and total energy value of the product.vc

## Description

### Technical Field

The invention relates to the area of the food industry, more specifically to the area of waste processing of the brewing industry, even more so to the method of separation of the endosperm and exosperm fractions of the brewer's spent grains, obtained during beer lautering process.

### Background Art

The grain of malting barley, or malt, consists of three main structures, the starchy endosperm, the germ, and the covering exosperm, or bran. Malt crushing (shredding or grinding) during the brewing process breaks up the grain of the malting barley, exposing the starch particles embedded in the protein matrix, which also contains a small amount of soluble fiber. The exosperm forming the shell of the grain, is composed mainly of insoluble fiber and is separated from the endosperm by an aleurone layer, containing mainly proteins, minerals and plant sterols.

The basic steps in the production of beer are: malt crushing (shredding into larger particles or grinding into fine particles), wiping (mixing crushed malt with water), mashing (transforming the starch released from the malt with the help of malt enzymes into fermentable carbohydrates), lautering (a separation of the liquid wort from solid malt residues) and a hop boiling, in which hops are gradually added to the boiling wort. This is followed by fermentation and aging of the beer. Currently, two methods of lautering are most commonly used in the brewing process, each requiring a different coarseness of malt crushing.

An intact structure of the exosperm is necessary for the traditional method of lautering, which takes place in a lauter tun (Smejtková, A., et al. "Rating of malt grist fineness with respect to the used grinding equipment." Research in Agricultural Engineering 62.3 (2016): 141-146). The intact exosperm forms a filter bed and traps the finer solids in the otherwise cloudy mash so that a clear wort flows out of the lauter tun. In this case, crushing is used, which produces malt particles larger than 0.9 mm. During crushing, the aleurone layer is separated along with the exosperm (Buri, R.C., Von Reding, W., and Gavin, M.H. Description and characterization of wheat aleurone. Cereal Foods World. 2004, 49: 274-282.). Brewer's spent grains (ground or threshing floor), which is a waste material after lautering, consists of more or less intact exosperm with an attached aleurone layer, partially crushed endosperm, germ fragments and proteins coagulated during mashing.

In the modern industrial way of beer production, the traditional lautering process is replaced by membrane filters. The malt is then milled into particles smaller than 0.5 mm and larger than 0.005 mm, which allows for maximum starch extraction and thus malt yield. When membrane filters are used, the remaining extract in the brewer's spent grains is only 4 % by weight, which, due to the low volume of nutrients and questionable palatability, does not support further use in the food industry. The Brewer's spent grains are then used as feed for domestic animals.

The use of brewer's spent grains, obtained by the traditional lautering method, in the food industry, e.g. in the production of pastries, has a long tradition. While the addition of 25 % to 35 % by weight of unprocessed brewer's spent grains into flour increases the protein content, the addition of 15 % by weight of unprocessed brewer's spent grains more than doubles the fiber content of bread sticks. However, the high content of water in unprocessed brewer's spent grains affects the structure of breadsticks and causes insufficient crunchiness (Ktenioudaki A., Chaurin V., Reis F S., Gallagher E. Brewer's spent grain as a functional ingredient for breadsticks. International Journal of Food Science. 2012, 47(8), 1765-1771). In the process of bread baking, the addition of unprocessed brewer's spent in an amount higher than 25 % by weight results in a sticky bread crumb which thus limits further increase in bread fiber content. When using dried brewer's spent grains in the biscuits production, the crispness of the biscuits is sufficient, but the high number of sharp fragments of dried husk was negatively evaluated during the sensory evaluation (Ktenioudaki, Anastasia, et al. "Sensory properties and aromatic composition of baked snacks containing brewer's spent grains." Journal of Cereal Science 57.3 (2013): 384-390.).

Although it is generally recognized that brewer's spent grains have a high dietary value, its use in the food industry encounters a number of technological problems. While, for example, during the mashing and lautering beer production phase, brewer's spent grains undergo effective pasteurization, after it is removed from the strainer pan and cooled down to below 30 °C, it becomes contaminated and undergoes fermentation within a few hours. The drying process, which is considered to be a good method of preservation, in turn significantly changes the yield of digestible proteins. In addition, drying can change the organoleptic properties of products such as bakery products due to the high number of sharp-edged dried husk. Further steps in the processing of brewer's spent, such as grinding, adding water or chemicals, as well as the complex technology required for processing, are resource-intensive and thus increase the cost of the production, which leads to the brewer's spent grains use economic value decrease and an increase in an environmental impact of such of brewer's spent grains uses.

The method described in document EP 3915391 A1 requires the addition of water (new and/or obtained during the production process) during the brewer's spent grains milling, which is followed by a two-stage process of husk separation as well as drying and grinding of the resulting product, which is than loosened on a vibrating sieve with an average mesh size of 6 to 10 mm, and passed into a colloidal mill, where it is ground into a fine paste with an average particle size of 0.005 to 0.5 mm. When passing through the colloidal mill, water is added to achieve a maximum of 95 % moisture of the pasty mass. In the next step, the intermediate product is passed through a screw press to remove larger husk particles. This is followed by the removal of fine particles carried out on vibrating sieves with an average hole size of 0.2 to 0.6 mm, followed by a drying process. Depending on the drying method used, the suspension is dried for 8 to 10 hours at a temperature of 80 to 200 °C to achieve a final moisture content of approximately 7 %. The dry intermediate product is in the form of granules with an average size of 0.1 to 5 mm. The granules may be ground to obtain a powder with an average particle size of 0.1 mm or less. The disadvantage of the described method is that the addition of water to the milling production step increases the moisture content of the intermediate product, which must be reduced again in the next step. This increases energy consumption, production costs and the carbon footprint of the final product. The energy requirement is also increased by the two-stage process of brewer's spent grains separation. Another disadvantage is the re-adding of water, obtained during the production process, to the colloid mill. This can result in multiple passes of such water through the colloid mill, resulting in repeated contact with the moving metal parts of the equipment. As a result, there may be an increase in contamination of the final product with the metals that make up the moving parts of the colloid mill. In addition, the husk removed during separation are ground to fine particles to allow the proteins of the aleurone layer extraction, which makes husk residue difficult to use in the food industry.

These disadvantages have been partially eliminated in document RU 2215426, which describes a two-stage pressing process in which the original 90 to 92 % moisture of the raw brewer's spent grains is reduced to 70 to 75 % by weight in the first step and up to 40 to 45 % by weight during the second step. Then follows a two-stage drying process, during which the moisture is further reduced to 20 to 25 % by weight and subsequently to 10 % by weight. The described method is disadvantageous due to the significant energy requirement of two-stage pressing and subsequent drying processes. In addition, the removal of waste water during two-stage pressing results in a loss of dissolved nutrients and thus only a partial use of brewer's spent grains for food production.

Another method of processing brewer's spent grains are described in document RU 2250045 C2, which describes the pressing of brewer's spent grains into a paste with a dry matter content above 20 % by weight, followed by isolation of the pressed solid fraction and separation of the liquid fraction. Liquid fraction containing 2.5 to 3 % by weight proteins, is transferred into a centrifuge, where separation is carried out into a solid part, which returns to the fractionation process, and a liquid part, which is removed from the next process. The solid fraction is dried at 40 to 60 °C, followed by hammer milling and two-stage sieving with a final product of 0.2 mm particle diameter. The final product is bioactive flour. The disadvantage of such a method is the complex technological arrangement, the energy requirements of the drying processes, which increases the costs and the carbon footprint of the final product, and further, part of the liquid fraction and husk become waste.

Another known method of processing brewer's spent grains is based on its hydrolysis and is described in document WO 2018/136234 A1. This method is based on the hydrolysis of brewer's spent grains with the addition of water in a ratio of up to 6:1 and heating from 30 to 70 °C. The pH range of raw brewer's spent grains is adjusted from the original range of 3.5 to 6.5 to pH 4.5 to 5.5 using a suitable acid. Sugar-breaking enzymes such as glucoamylase are also added. The mixture is continuously stirred until a substantial amount of starch contained in the mash is hydrolyzed. The mash is then ground to 500 µm particles with the addition of water at a ratio of 8:1 to 11:1, the intermediate product is then passed through a 60 µ mesh sieve, the pH of the mixture is raised to 10.5, followed by the introduction of protease to achieve protein dissolution. The resulting product is 60 to 90% protein and a cellulose residue. Disadvantages of this method are the need for complex equipment, a long production cycle involving heating to activate and deactivate enzymes, the use of acidic and alkaline chemicals to change the pH, high water consumption producing wastewater and heating the intermediate product, which increases the energy intensity, carbon footprint of the technology and depletes natural resources.

A solution for the effective separation of protein-rich brewer's spent grains components using a three-stage roller mill is described in EP 0694609 A2, where the three-stage roller mill has a pair of rollers provided with cutting edges and rotating at a predetermined speed ratio to ensure crushing and peeling of the brewer's spent grains from the grain husk in a wet state. The disadvantage is that, in order to increase protein extraction, the ground intermediate product is rinsed with a large amount of water before the five stage separation on sieve plates. The result of this process is a large volume of wastewater that must be treated before discharge. A similar approach is also applied to the husk, which are cut during the production process in such a way as to facilitate the extraction of proteins. The considerable consumption of water during the entire described method of processing brewery brewer's spent grains considerably increases costs, and the separated husk become waste.

The object of the invention is therefore to come up with a method of the endosperm and exosperm fractions separation from the brewer's spent grains, obtained during the traditional method of the mash lautering, which would eliminate the above-mentioned disadvantages and would be simple, easy to implement, cost-effective with a low carbon footprint, providing products with a calibrated fiber content, carbohydrates and/or proteins that could be fully used in the food industry without undesirable flavors or additives and without any waste.

### Disclosure of the Invention

The object is achieved by means of a method of simple separation of the endosperm and exosperm fractions from the brewer's spent grains obtained during the traditional mash lautering in a lauter tun, in which there is no further disintegration, for example by grinding or chopping, of the husk structure, but the husk fibers are only loosened and bended during pressing which does not result in forming additional sharp edges during heat treatment of the final food product, such as baking or drying. The essence of the invention lies in the fact that the method includes the following sequential steps:
a) first, the brewer's spent grains are conveyed by a screw extractor or by hand from a strainer pan to a double-screw spiral press with round edges and sieve holes with a diameter of 0.5 to 1.0 mm operating at a speed of 70 to 100 rpm, separating the brewer's spent grains into endosperm and the exosperm fractions, the endosperm fraction is forced through a sieve on the periphery of the press, the exosperm fraction leaves through an opening in the front part of the press,
b) the separated endosperm and exosperm fractions are directly filled each separately into vacuum-sealable transport containers,
c) vacuum-sealable packages filled with exosperm and endosperm fractions are cooled down to 4 °C for transport to direct use.

Such a solution is simple to implement, low-cost, with a low carbon footprint, while the output is products with a specific content of fiber, carbohydrates and proteins, enabling their exact content calibration in the product, full use without any waste in the food industry, without unwanted flavors or additives. The exosperm and endosperm fractions are further used in the food industry immediately, in a fresh state.

In a preferred embodiment, after step c), in step d), the vacuum-sealable packages filled with the exosperm and endosperm fractions are cooled to a temperature of 4 °C for transport to the consumer without the need for direct processing.

In another preferred embodiment, after step c) or after step d), the exosperm fraction and/or endosperm fraction is stabilized using a food preservative selected from the group of substance derivatives: acetic acid, sorbic acid, benzoic acid, p-hydroxybenzoic acid, sulfur dioxide, and/ or a combination thereof. This stabilization is advantageous if the exosperm and/or endosperm fraction must be stored for later use.

In another preferred embodiment, after step c) or after step d), the exosperm fraction and/or the endosperm fraction is stabilized using physical stabilization methods such as drying or freezing. Such stabilization is advantageous in the event that the exosperm fraction and/or the endosperm fraction is preserved for later use, without chemical additives and preservatives.

The set task is further solved using a combination of endosperm and exosperm fractions from the brewer's spent grains in a natural ratio of 60/40 percent. The use of separated fractions of exosperm and endosperm makes it possible to increase the content of fiber and/or protein, while simultaneously reducing the content of carbohydrates and energy in the product compared to the currently achieved values, i.e. up to 35 % by weight of unmodified brewer's spent grains in the recipe of the food product, while the organoleptic properties of the resulting bakery product do not change.

The set task is further solved using the endosperm fraction from the brewer's spent grains. The essence of the invention is that the endosperm fraction is prepared in the above-described manner, with a maximum moisture content of 89 % by weight, while in dry matter it contains at maximum 47 % of carbohydrates, 28 % of fiber and 25 % of proteins by weight. Such a composition of the endosperm fraction provides, up to twice the protein content, half the carbohydrate content and seven times the fiber content compared to flour, while more than 30 % of the total fiber content in the endosperm is a soluble fiber. It is thus suitable for the targeted production of bakery products in which a reduced sugar content, added protein and an increased content of insoluble and soluble fibers are desirable, moreover, it does not change the product properties and preserves the characteristic taste of the resulting bakery product. For the same reason, endosperm can be used in products made from processed cereals, for example pasta and cereal bars with reduced carbohydrate content, lower energy value of the product and increased fiber and protein content.

The set task is further solved using the exosperm fraction from the brewer's spent grains. The essence of the invention is that the exosperm fraction is prepared in the above-described manner, with a maximum moisture content of 75 % by weight, while in dry matter it contains at maximum of 7 % of starch, at maximum 78 % of fiber and at maximum 15 % of proteins by weight. Such a composition of the exosperm fraction provides a high content of insoluble fiber and protein along with the reduced content of carbohydrates compared to flour, so it is suitable for the targeted production of bakery products in which it is desirable to calibrate the increased content of fiber and/or protein along with the reduced content of carbohydrates and total energy contained in of the product to achieve specific health benefits, while not changing the product properties and preserving the characteristic taste of the resulting bakery product. For the same reason, exosperm can be used in products made from processed cereals, for example pasta and cereal bars.

The use of the endosperm and/or exosperm fraction is advantageous in the production of bakery products or products from processed cereals, in which the exosperm and/or endosperm fraction is used for a calibrated increase in the content of insoluble and/or soluble fiber, protein and/or a reduction in the content of carbohydrates and energy, while simultaneously replacing at least a part of the flour in the recipe with a raw material with a lower purchasing price.

The set task is to be solved using a bakery product or a product made from processed cereals. The essence of the invention lies in the fact that the bakery product includes an endosperm fraction prepared in the above-described manner with the above-described composition. The endosperm fraction is contained in a bakery product or a product made from processed cereals in a maximum amount at which the mass fraction of water present in the endosperm fraction corresponds to the prescribed water mass in the product recipe. Such a solution delivers the maximum share of the endosperm fraction in the product minimizing the costs, replacing flour rich in carbohydrates and energy with an endosperm fraction having a reduced content of carbohydrates and energy, while simultaneously increasing the content of insoluble and soluble fiber and protein, while preserving the characteristic taste of the product. If the recipe calls for a higher endosperm content in specific cases, it is possible to remove the corresponding amount of water from the endosperm using common physical procedures.

The set task is to be solved using a bakery product or a product made from processed cereals. The essence of the invention lies in the fact that the product includes an exosperm fraction prepared in the above-described manner with the above-mentioned composition. The exosperm fraction is contained in a bakery product or a product made from processed cereals in a maximum of 50 % by weight. Such a solution provides the possibility to calibrate the exosperm content in bakery or other processed cereal products, for example pasta and cereal bars, in such a way as to increase the proportion of insoluble fiber while simultaneously reducing the proportion of carbohydrates in the recipe, while maintaining the characteristic taste of the product.

The advantages of the method of separating the endosperm and exosperm fractions from the brewer's spent grains according to the presented invention are mainly that it is simple, easy to implement, cost-effective with a low carbon footprint and provides products with an increased content of insoluble and/or soluble fiber and/or a reduced content of carbohydrates and energy that can be used in the food industry without resulting unwanted flavors or additives and without any waste. The fiber, carbohydrate, protein and energy content can be easily calibrated to meet the relevant nutritional profiles, given for example by EU Regulation No. 1924/2006 on nutrition and health claims in food labeling, as amended, and/or the required health benefits of the product.

### Examples of the Invention

### Example 1: Process of the of endosperm and exosperm fractions separation

Brewer's spent grains, which is produced during beer brewing lautering step process by separating that from the wort, has a moisture content of between 60 and 90 %, depending on the brewing technology used, and is preferably processed in the brewery immediately after the lautering phase of the brewing process at a temperature between 80 and 90 °C, when the brewer's spent grains are practically pasteurized.

The brewer's spent grains are then transported by a screw extractor to a double-screw spiral press with rounded edges, in which there is no further cutting or other division of the husk into the smaller parts desired, operating at speeds between 70 and 100 rpm, with a fine sieve with holes having a diameter of 0.5 up to 1.0 mm in size. The result of the process is the separation of the brewer's spent grains into the endosperm and exosperm fractions in one step. The endosperm fraction is forced through a sieve on the perimeter of the press, the exosperm fraction leaves through an opening in the front part of the press. Both fractions are separately packed in transport vacuum-sealable packaging and placed in a standard brewery or bakery cooler at a temperature of 4 °C. Both fractions are then shipped for food production purposes, e.g. to a bakery, where they are used during the next daily production cycle.

Stabilization of the endosperm fraction and the exosperm fractions by common food preservatives or physical processes is possible, but is not necessary under the observance of standard sanitation methods during production and if the endosperm and the exosperm fractions production is well coordinated in time and place with the use in the food industry.

The moisture content of the endosperm fraction is preferably in the range of 70 % to 89 %, depending on the efficiency of the lautering process. The exosperm fraction consists of husk loosened into the fibers that are crumpled during the pressing process, while the process of the endosperm and exosperm separation usually does not result in the sharp edges generation, that after the final heat treatment of a bakery or processed cereal product would have negative impact on the organoleptic qualities of products. The moisture level of the exosperm is preferably between 55 % and 75 %, depending on the efficiency of the lautering process. Proteins are represented by 25 % in the dry matter of the endosperm and 15 % in the exosperm.

Carbohydrates content in the endosperm dry matter is 47 % by weight, compared to the exosperm fraction, which contains at maximum 7 % of carbohydrates by weight. Compared to the plain wheat bread flour, however, the carbohydrate content in the endosperm is roughly a half and in the exosperm it is about 11times lower. The amount of fiber, on the other hand, is significantly higher in the exosperm fraction, where insoluble fiber represents 78 % by weight in dry matter. Compared to that, at endosperm fraction the fiber content is only 28 % by weight in dry matter, but soluble fiber represents 30 % of the total fiber endosperm content.

### Example 2: Endosperm and exosperm fractions separation procedure

240 kg of brewer's spent grains, with a moisture content of 73.9 % and energy value of 270 kJ, i.e. 64 kcal, was used. It was manually loaded into a two-screw spiral press with rounded edges, where no further cutting of the husk into smaller parts is intended, operating at between 70 and 100 rpm, with a fine sieve with holes of 0.5 to 1.0 mm in diameter. The total processing time was approximately one hour on a device that produced both size-separated fractions of approximately 60 % by weight of endosperm and approximately 40 % by weight of the exosperm. The average distribution of brewer's spent grains nutrients between the endosperm and exosperm fractions obtained during the separation process is shown in Table 1. The nutritional values of plain wheat bread flour are shown for comparison. The method can be easily scaled according to production volume requirements.

**Table 1: Average distribution of brewer's wort nutrients between endosperm and exosperm fractions**

| Example | Brewer's spent grains | Exosperm fraction | Endosperm fraction | Wheat bread flour |
|---|---|---|---|---|
| Humidity [g/100 g] | 73,9 | 66,2 | 82,3 | 15,0 |
| Protein [g/100 g] | 4,8 | 5,1 | 4,4 | 11,0 |
| Carbohydrates [g/100 g] | 1,0 | 2,4 | 8,4 | 71,0 |
| Fiber [g/100 g] | 20,3 | 26,2 | 4,9 | 3,5 |
| Energy [kJ/kcal] | 270/64 | 348/83 | 261/62 | 1465/345 |

The exosperm fraction of brewer's spent grains make it possible, when added to food products such as baked goods, to significantly increase the total fiber content above the level usually achieved with unprocessed brewer's spent grains. Compared to the use of unprocessed brewer's spent grains, the water content of the exosperm fraction is significantly lower and the fiber content is higher, which makes it possible to significantly increase the fiber content of the recipe without increasing the water content of the final product, which would result in making the pastry crumb sticky. In addition, during the separation process, the hydrated husk that make up for the majority of the exosperm are only bent, crumpled and loosened into fibers, so that sharp edges generation, which would harden during the heat treatment of the final product and thus could negatively affect its organoleptic properties, are avoided during the separation process. The exosperm fraction is contained in a bakery product or a product made from processed cereals in at maximum of 50 % by weight. Such a solution provides the possibility to adjust the proportion of the exosperm fraction in a bakery product or a product made from processed cereals, while the calibration of the content of fiber, protein and carbohydrates makes it possible to achieve the desired properties of the product while at the same time preserving the characteristic taste of the product.

When added to food products, the brewer's spent grains fraction from the endosperm can be used as a flour substitute and/or to reduce the carbohydrate and energy content, while increasing the content of insoluble and soluble fiber and protein in the recipe. The total amount of endosperm fraction used as a flour substitute is limited by the water content of the endosperm fraction. The share of the endosperm fraction in the recipe can be increased up to the level where the total water content of the endosperm fraction added to the product recipe is equal to the total water content prescribed by the bakery product or the processed cereal product recipe.

### Example 3: Bread recipe using combination of the exosperm fraction and raw brewer's spent grains

For the preparation of the dough for the production of CaliBread dark bread with an increased fiber content, the raw materials according to Table 2 were used, in which the exosperm represents 8.6 % by weight and raw brewer's spent grains 8.6 % by weight.

**Table 2:**

| **Ingredient** | **% by Weight** |
|---|---|
| Wheat bread flour | 25,9 |
| Rye bread flour | 17,3 |
| Yeast | 0,5 |
| Salt | 1,2 |
| Bass Additive | 1,1 |
| Caraway seeds | 0,2 |
| Water | 35,2 |
| Rye flour for dusting | 1,3 |
| Raw Brewer's Spent Grains | 8,6 |
| Exosperm | 8,6 |
| Total | 100,0 |

The results of the tested bread recipe marked as "CaliBread bread" compared to the Sumava reference bread are shown in Table 3. The protein content of the bread and pastry was determined according to CSN 56 0116 (conversion factor 5.7) and the total fiber content (enzymatically-gravimetrically according to AOAC 985.29). The measurements were supplemented by the determination of ash (according to CSN 56 0512). The content values of the ingredients were used to express the nutritional value of the products (g/100 g of products). An estimate of the energy value of bread and pastries (based on 100 g of the product) was made. The measurement was carried out by the University of Chemistry and Technology in Prague, Faculty of Food and Biochemical Technology, Institute of Carbohydrates and Cereals. For comparison, the nutritional values for the reference bread "Sumava" according to the nutritional tables are also given (www.kaloricketabulky.cz/potraviny/chleb-sumava).

**Table 3: Nutritional values of CaliBread bread and Šumava reference bread**

| **Ingredient [g/100 g] Bread Brand** | **CaliBread Bread** | **Šumava Bread** |
|---|---|---|
| Protein | 12,1 | 7,7 |
| Carbohydrates (calc.) | 32,2 | 47,7 |
| of which Starch (calc.) | 12,4 | 44,7 |
| of which Fiber | 19,7 | 3,0 |
| Average Energy 100 g [kJ/kcal] | 587/140 | 983/234 |

**Table 4. CaliBread bread nutritional values vs. the reference Sumava bread**

| **Test Result** | **Statement** |
|---|---|
| 40 % reduced calorie content | Reduced calorie content* (*vs Šumava bread) |
| 19,7 g / 100 g fiber content | High fiber content |
| 19,7 g vs. 2,0g / 100 g fiber content | 5times higher in fiber* (*vs Šumava bread) |
| 12,1 g / 100 g protein content | Source of protein |
| 12,1 g / 100 g protein content | High in protein |
| 51 % higher protein content | Higher in protein* (*vs Šumava bread) |

### Example 4: Recipe for white bread with endosperm content

For the preparation of dough for the production of CaliBread white bread with endosperm content, raw materials according to Table 5 were used, in which endosperm represents 27.2% by weight.

**Table 5:**

| **Ingredient** | **% by Weight** |
|---|---|
| Wheat bread flour | 54,4 |
| Yeast | 2,1 |
| Salt | 1,1 |
| Oil | 3,3 |
| Water | 10,9 |
| Endosperm | 27,2 |
| Sugar | 0,5 |
| Rapid Star Additive | 0,5 |
| Total | 100,0 |

The results of the tested recipe marked "CaliBread white bread" in comparison with the reference white bread are shown in Table 6. The protein content of the bread was determined according to CSN 56 0116 (conversion factor 5.7) and the total fiber content (enzymatically-gravimetrically according to AOAC 985.29). The measurements were supplemented by the determination of ash (according to CSN 56 0512). The content values of the ingredients were used to express the nutritional value of the products (g/100 g of products). An estimate of the energy value of baked goods (based on 100 g of the product) was made. The measurement was carried out by the University of Chemistry and Technology in Prague, Faculty of Food and Biochemical Technology, Institute of Carbohydrates and Cereals.

**Table 6: Nutritional values of CaliBread white bread and reference white bread**

| **Ingredient [g/100 g] Označení pečiva** | **CaliBread white bread** | **Reference white bread** |
|---|---|---|
| Bilkoviny | 12,6 | 11,8 |
| Carbohydrates (calculation) | 55,4 | 58,2 |
| of which starch (calculation) | 47,3 | 50,5 |
| of which fiber | 8,1 | 7,7 |
| Average Total Energy 100 g [kJ/kcal] | 1098/262 | 1136/271 |

**Table 7: Claims based on the nutritional values of CaliBread white bread**

| **Test Result** | **Statement** |
|---|---|
| 12,6 g / 100 g Protein | Source of protein |
| 8,1 g Fiber | Source of fiber |

### Example 5: Egg-free pasta recipe with endosperm content

For the preparation of dough for the production of egg-free pasta with endosperm content, raw materials according to Table 8 were used, in which endosperm represents 49.99 % by weight. The results of the tested recipe labeled "CaliBread pasta" compared to the reference pasta are shown in Table 9.

**Table 8.**

| **Ingredient** | **% by Weight** |
|---|---|
| Semola di grano duro | 50,00 |
| Salt | 0,01 |
| Endosperm | 49,99 |
| Total | 100,00 |

**Table 9: Nutritional values of CaliBread pasta and reference egg-free pasta**

| **Ingredient [g/100 g] Pasta Brand** | **CaliBread Pasta** | **Reference Pasta** |
|---|---|---|
| Protein | 18,0 | 11,8 |
| Carbohydrates | 54,0 | 72,5 |
| Fiber | 15,5 | 3,3 |

**Table 10: Comparison of nutritional values of CaliBread pasta and reference pasta**

| **Test Result vs. Reference pasta** | **Statement** |
|---|---|
| 25 % lower carbohydrates content | 25 % lower in carbohydrates* (*vs. Reference pasta) |
| 15,5 g / 100 g fiber content | High in fiber |
| 15,5 g vs. 3,3 g / 100 g fiber content | 4times higher in fiber (*vs. Reference pasta) |
| 18,0 g / 100 g protein | Source of protein |
| 18,0 g / 100 g protein | High in proteine |
| 52 % higher protein content | 50 % higher in protein (*vs. Reference pasta) |

### Industrial applicability

The method of separating the endosperm and exosperm fractions from the brewer's spent grains according to this invention can be used especially for the food industry, when the endosperm fraction is used in bakery products or products from processed cereals as a flour replacement, while making it possible to reduce the carbohydrate content and thus the total energy value of the bakery product or product from of processed cereals while simultaneously increasing the protein and fiber content, including an increase in the soluble fiber content, while not changing the properties and preserving the characteristic taste of the resulting bakery product or processed cereal product. The exosperm fraction used in bakery products or processed cereal products increases the fiber content while simultaneously reducing the carbohydrate content and thus also the energy value of the bakery product or processed cereal product without unwanted flavors or additives. The method of separating the endosperm and exosperm fractions from the brewer's spent grains enables the achievement of the values needed to meet the relevant nutritional profiles, given, for example, by Regulation of the European Parliament and the EC Council No. 1924/2006 on nutrition and health claims in food labeling, as amended and/or required health benefits of the product.

## Claims

1. A method of separating the endosperm and exosperm fractions from the brewer's spent grains, **characterized in that** it includes the following sequential steps:
a) brewer's mash is first transported by a sanitized screw extractor or manually into a double-screw spiral press,
b) on a two-screw spiral press with round edges and sieve holes with a diameter of 0.5 to 1.0 mm operatings at a speed of 70 to 100 rpm. the endosperm fraction is forced through a sieve on the periphery of the press, while the exosperm fraction leaves through an opening in the front part of the press,
c) finally, the separated endosperm and exosperm fractions are directly filled each separately into transport vacuum-sealable containers.

2. The method according to claim 1, **characterized in that** after step c) the vacuum-sealed transport packages are cooled to a temperature of 4 °C in step d).

3. The method according to claim 1 or 2, **characterized in that** after step c) or after step d), the exosperm fraction and/or endosperm fraction is stabilized in the next step by adding a food preservative selected from the group of substance derivatives: acetic acid, sorbic acid, benzoic acid, p-hydroxybenzoic acid, sulfur dioxide, and/or combinations thereof.

4. The method according to claim 1 or 2, **characterized in that** after step c) or after step d) the exosperm fraction and/or endosperm fraction is stabilized in the following step by drying or freezing.

5. Endosperm fraction from brewer's spent grains prepared by the method according to one of claims 1 to 4, **characterized in that** it has a maximum moisture content of 89 % by weight, while in dry matter it contains a maximum of 47 % carbohydrates, maximum 25 % of proteins and a maximum of 28 % of fiber (of which soluble fiber makes up 30 %) by weight in dry matter.

6. Exosperm fraction from brewer's spent grains prepared by the method according to one of claims 1 to 4, **characterized in that** it has a maximum moisture content of 75 % by weight, while the dry matter contains a maximum of 7 % of carbohydrates, a maximum of 78 % of fiber and a maximum of 15 % of protein by weight in dry matter.

7. Use of the endosperm and/or exosperm fractions from brewer's spent grains prepared by the method according to one of claims 1 to 4 in the production of bakery products or a product from processed cereals, in which the endosperm and/or exosperm fraction is used as an additive to increase the content of fiber, protein and/or or as a substitute for at least part of the flour to reduce the carbohydrate and energy content of the product to the required level.

8. A bakery product or a product made from processed cereals including an endosperm fraction from brewer's spent grains according to claim 5, prepared by a method according to one of claims 1 to 4, **characterized in that** the endosperm fraction is in the bakery product or a product from processed of cereals contained at most in the amount at which the mass proportion of water in the endosperm fraction corresponds to the prescribed mass proportion of water in the bakery product or a product made from processed cereals recipe.

9. A bakery product or a product made from processed cereals including an exosperm fraction from brewer's spent grains according to claim 6, prepared by a method according to one of claims 1 to 4, **characterized in that** the exosperm fraction in a bakery product or in a product from processed cereals contained in a maximum of 50 % by weight.
